# FASCICULE DE BREVET EUROPEEN

(11) **EP 3 356 791 B1**
(45) Date de publication et mention de la délivrance du brevet: **31.07.2019**
(21) Numéro de dépôt: 16788160.6
(22) Date de dépôt: 30.09.2016
(51) Int. Cl.: G01N 15/08, G01N 13/00

(54) **CELLULE DE DIFFUSION ET UTILISATIONS POUR ÉVALUER LA DIFFUSION D'UN COMPOSÉ À TRAVERS UNE MEMBRANE**
DIFFUSIONSZELLE UND VERWENDUNGEN ZUR AUSWERTUNG DER DIFFUSION EINER VERBINDUNG DURCH EINE MEMBRAN
DIFFUSION CELL AND USES FOR EVALUATING THE DIFFUSION OF A COMPOUND THROUGH A MEMBRANE

(30) Priorité: 01.10.2015 FR 1559325; 08.03.2016 FR 1651923
(43) Date de publication de la demande: 08.08.2018
(73) Titulaire: Galderma Research & Development, 06410 Biot (FR)
(72) Inventeur: OSMAN-PONCHET, Hanan, 06600 Antibes (FR); FREDON, Laurent, 06330 Roquefort-les-Pins (FR); BIANCHI, Christophe Jacques Louis, 06100 Nice (FR)
(74) Mandataire: Nederlandsch Octrooibureau
(86) Numéro de dépôt international: PCT/FR2016/052506
(87) Numéro de publication internationale: WO 2017/055769

(56) Documents cités:
- WO-A1-2013/057401
- US-A1- 2005 063 862
- FRANZ T J: "Percutaneous absorption on the relevance of in vitro data", JOURNAL OF INVESTIGATIVE DERMATOLOGY, NATURE PUBLISHING GROUP, US, vol. 64, no. 3, 1 mars 1975 (1975-03-01), pages 190-195, XP003002651, ISSN: 0022-202X, DOI: 10.1111/1523-1747.EP12533356 cité dans la demande

## Description

L'invention se rapporte à une nouvelle cellule de diffusion et ses utilisations, en particulier pour l'analyse d'une composition formulée en aérosol ou sous forme de patch. L'invention trouve des applications notamment dans le domaine cosmétique, pharmaceutique ou vétérinaire, pour évaluer la pénétration et la perméation cutanée d'un composé d'intérêt.

L'étude de la diffusion d'un composé à travers la peau, ou la pénétration percutanée, est une étape importante dans le processus d'élaboration d'une composition cosmétique, pharmaceutique ou vétérinaire. En effet, une telle étude permet entre autre d'évaluer l'absorption, la distribution et l'élimination tissulaire dudit composé. Ces caractéristiques sont fonction également des ingrédients et de la forme (liquide, solide, semi-solide, en gel, gazeuse, etc.) de la composition choisie pour l'administration dudit composé. Il est donc important que ces paramètres additionnels puissent être pris en compte lors de l'étude de diffusion.

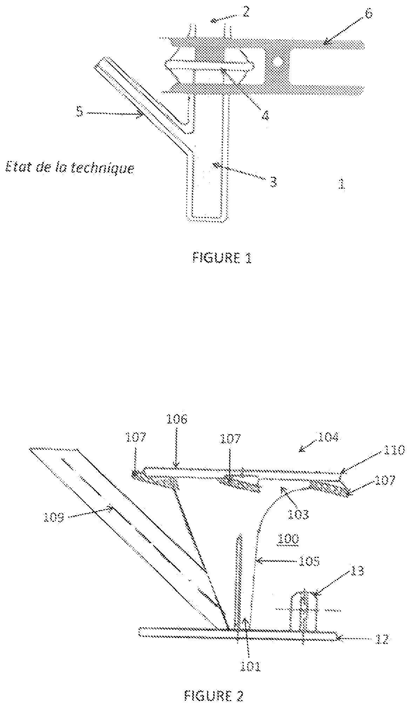

Actuellement, l'une des méthodes la plus utilisée pour évaluer la pénétration percutanée d'un composé d'intérêt est la méthode de diffusion en cellule de Franz (Franz T.J, J Invest Dermatol, 64 : 190-195; 1975). Un exemple d'une cellule de Franz est représenté de manière schématique à la figure 1. Une telle cellule 1 verticale comprend classiquement un compartiment donneur 2, séparé d'un compartiment receveur 3 par une membrane 4, telle qu'un échantillon de peau. Afin d'assurer l'étanchéité du dispositif, une pince 6 est placée entre le compartiment donneur 2 et le compartiment receveur 3, la membrane 4 faisant office de joint torique. Le compartiment donneur 2 reçoit la formulation contenant le composé à étudier. Le compartiment receveur 3 contient une solution destinée à collecter ce qui percole à travers l'échantillon de peau. Une canule 5 permet de prélever à intervalles réguliers des échantillons de la solution pour l'analyse, afin de doser les molécules qui ont traversé la membrane 4.

Une telle configuration est particulièrement adaptée à l'analyse de compositions liquides, solides, semi-solides ou en gel, que l'on dépose aisément dans le compartiment donneur. A l'inverse, il n'est pas possible d'analyser directement une composition conditionnée en aérosol, c'est-à-dire une composition destinée à être diffusée par un gaz sous forme de particules solides ou liquides, généralement microscopiques (inférieures à 50 µm). En effet, la surface utile de membrane dans une cellule de Franz est généralement de l'ordre de 1 à 2 cm². Il n'est donc pas possible de vaporiser avec précision une quantité déterminée de la composition sur ladite membrane. Le plus souvent ces compositions sont reconditionnées sous forme liquide pour pouvoir être déposées sur la membrane, Ce reconditionnement modifie les conditions d'utilisation de la composition et peut également diluer le composé à détecter et/ou doser. Un tel reconditionnement ne permet donc pas non plus une évaluation fiable de la pénétration percutanée d'une composition aérosol.

Pour pouvoir analyser directement la diffusion d'un composé d'intérêt dans une composition conditionnée en aérosol, la surface utile de membrane devrait être au moins triplée. Mais une simple augmentation des dimensions de la cellule de diffusion entraînerait de nombreux problèmes, en termes d'étanchéité et de fiabilité des résultats. En effet, l'épaisseur de l'échantillon de membrane, tel qu'un échantillon de peau, peut ne pas être uniforme sur toute la surface utile, entraînant des risques de perte d'étanchéité d'autant plus grands que la surface de peau est importante. De plus, l'augmentation en parallèle du volume du compartiment receveur peut être préjudiciable, notamment lors de l'analyse de composés présentant une faible pénétration.

Il existe également des cellules de diffusion dont les compartiments donneur et receveur se présentent sous la forme de plaques multi-puits, la membrane étant prise en sandwichs entre les deux plaques. Cette configuration permet l'utilisation d'une grande surface de membrane. Elle ne donne cependant pas satisfaction pour l'évaluation de la diffusion d'un composé dans une composition sous forme aérosol. En effet, lors de la vaporisation d'une telle composition sur la membrane, il n'est pas possible de savoir avec exactitude la dose reçue au niveau de chaque puits. De plus, certaines portions de la membrane qui reçoivent des gouttelettes de l'aérosol ne sont pas en regard d'un puits.

Il n'existe donc pas à ce jour de dispositif satisfaisant permettant d'analyser de manière fiable la pénétration percutanée d'un composé d'intérêt contenu dans une composition sous forme aérosol, ou toute forme nécessitant une surface de membrane importante.

L'invention a pour objectif de résoudre le problème énoncé ci-dessus, en proposant une cellule de diffusion, préférentiellement de type vertical, dont les dimensions peuvent être adaptées pour ménager une surface utile de membrane permettant directement l'analyse de compostions conditionnées en aérosol, ci-après formulations d'aérosol. De manière importante, la cellule de diffusion selon l'invention présente un système de maintien en position de l'échantillon de membrane, qui permet de s'adapter à différentes épaisseurs de membrane. Ainsi, l'augmentation des dimensions de la cellule, comparativement aux dimensions des cellules de diffusion actuelles, peut se faire sans préjudice de l'étanchéité de l'ensemble. Afin de limiter le volume du compartiment receveur, la cellule de diffusion selon l'invention peut en outre présenter une forme générale conique tronquée longitudinalement.

L'invention a donc pour objet une cellule de diffusion comprenant un compartiment receveur destiné à contenir un milieu receveur, une rondelle de serrage destinée à être positionnée au-dessus du compartiment receveur de sorte qu'un échantillon de membrane peut être disposé entre le compartiment receveur et la rondelle de serrage, et des moyens de serrage par rotation de la rondelle de serrage sur le compartiment receveur, lesdits moyens de serrage comprenant :
- au moins deux saillies de serrage inclinées sur une périphérie extérieure du compartiment receveur ; et
- au moins deux logements de serrage de forme complémentaire aux saillies de serrage inclinées, sur une périphérie extérieure de la rondelle de serrage, ou inversement,
lesdites saillies de serrage inclinées étant aptes à être bloquées chacune dans un logement de serrage par rotation de la rondelle de serrage par rapport au compartiment receveur.

Dans le contexte de l'invention, on désigne par « cellule de diffusion » un dispositif destiné à tout type d'analyse dans ou à travers une membrane, biologique ou non, et notamment à l'analyse de la pénétration d'un composé d'intérêt dans ou à travers une membrane.

L'expression « composé » ou « composé d'intérêt » est employée pour désigner une molécule naturelle ou synthétique, ou un ensemble de molécules, ainsi qu'une substance biologique telle que virus, toxine, débris cellulaires, etc., dans une composition ou formulation.

L'expression « formulation » est employée pour désigner tout type de composition liquide, solide, semi-solide ou en gel, que l'on dépose aisément dans le compartiment donneur.

La rondelle de serrage selon l'invention a avantageusement une forme générale en disque présentant un évidement central. L'évidement central vient en regard du compartiment receveur lorsque la rondelle est en position sur ledit compartiment. La rondelle présente avantageusement une surface d'appui plane destinée à venir en contact avec un échantillon de membrane disposé entre le compartiment receveur et ladite rondelle.

Les moyens de serrage selon l'invention sont répartis sur le compartiment receveur et la rondelle de serrage, de sorte qu'il n'est plus nécessaire d'amener des pinces ou autres éléments annexes pour maintenir l'ensemble du système. Plus précisément, les moyens de serrage comprennent des saillies de serrage et des logements de serrage complémentaires. Selon l'invention, les saillies de serrage peuvent être disposées sur la rondelle de serrage et les logements de serrage sur le compartiment receveur, ou inversement. Ainsi, une fois la rondelle de serrage positionnée sur le compartiment receveur, une simple rotation de ladite rondelle par rapport audit compartiment receveur permet d'amener les saillies de serrage dans les logements de serrage, ce qui bloque la rondelle de serrage en position sur le compartiment receveur.

Les saillies de serrage s'étendent radialement sur une périphérie extérieure, ou contour externe, du compartiment receveur ou de la rondelle de serrage. Ainsi, elles forment des projections qui dépassent du corps qui les porte et peuvent s'engager dans les logements de serrage de formes complémentaires, également en périphérie extérieure du corps qui les porte.

Dans un mode de réalisation particulier, les saillies de serrage s'étendent radialement sur une périphérie extérieure du compartiment receveur et les logements receveur sont ménagés sur une périphérie extérieure de la rondelle de serrage.

Afin de tenir compte des variations d'épaisseur possibles d'un échantillon de membrane à l'autre, les saillies de serrages sont inclinées. Les logements de serrage présentent également un évidement incliné, de manière à pouvoir recevoir les saillies de serrage dans leur intégralité. En fonction de l'épaisseur de la membrane disposée entre le compartiment receveur et la rondelle de serrage, la pénétration des saillies de serrage dans les logements de serrage est plus ou moins limitée. Plus la membrane est épaisse et moins les saillies de serrage sont logées dans les logements de serrage, et inversement. Dans tous les cas, la rondelle de serrage est maintenue en position sur le compartiment receveur, et la membrane, écrasée entre la surface d'appui de la rondelle et le compartiment receveur, peut faire office de joint torique. Avantageusement, la cellule de diffusion selon l'invention peut être utilisée avec un échantillon de membrane présentant une épaisseur comprise entre 0,5 et 10 mm, préférentiellement entre 1 et 5 mm.

Avantageusement les saillies de serrage sont inclinées avec une pente comprise entre 1° et 45°, préférentiellement entre 10° et 30°. Dans le contexte de l'invention, la pente désigne l'inclinaison de la saillie par rapport à la collerette, c'est-à-dire l'angle formé entre le plan de la saillie et le plan de la collerette. La pente peut être aisément adaptée en fonction de la nature de la membrane qui doit être utilisée.

Afin de répartir les zones de serrage et garantir un bon maintien de la rondelle de serrage sur le compartiment receveur et une bonne étanchéité du système, il est possible de prévoir trois, quatre ou plus de paires saillies de serrage inclinées / logements de serrage complémentaires. Avantageusement, les saillies et logements sont régulièrement répartis sur la périphérie extérieure du compartiment receveur et de la rondelle de serrage. Dans un exemple particulier, la cellule de diffusion comprend quatre paires de saillies de serrage/logements de serrage.

Dans un mode de réalisation particulier, une collerette s'étend radialement vers l'extérieur depuis une extrémité haute du compartiment receveur. La collerette sur le compartiment receveur forme une surface d'appui plane en regard de la surface d'appui de la rondelle de serrage. Ainsi, en fonctionnement, un contour externe de l'échantillon de membrane est serré entre la surface d'appui de la collerette sur le compartiment receveur et la surface d'appui de la rondelle de serrage. Le centre de l'échantillon de membrane est en regard de l'évidement central de la rondelle de serrage et en regard du compartiment receveur, définissant ainsi une surface utile de membrane.

Avantageusement, le compartiment receveur, la rondelle de serrage et les moyens de serrage sont en matériau plastique. Dans un mode de réalisation particulier le compartiment receveur est en polycarbonate et la rondelle de serrage est en polytétrafluoroéthylène. Dans un autre mode de réalisation, la rondelle de serrage et les moyens de serrage sont en polytétrafluoroéthylène. La cellule de diffusion peut ainsi être obtenue notamment par moulage, impression 3D, etc. Une telle cellule de diffusion peut être facilement nettoyée et stérilisée pour être réutilisée au besoin. Elle peut autrement être à usage unique et jetée après utilisation.

Dans un mode de réalisation particulier, la cellule de diffusion comprend un compartiment receveur avec un diamètre compris entre 3 et 5 cm et un volume compris entre 5 et 25 ml. La surface utile de membrane lorsqu'un échantillon de membrane est mis en position entre la rondelle et le compartiment receveur est alors comprise entre 7 et 20 cm². +/- 0,5. Par « surface utile de membrane », on entend la surface de la membrane qui sera positionnée au-dessus du milieu receveur et qui recevra l'échantillon de composition à analyser. Par exemple, le compartiment receveur présente un diamètre de 4 cm et un volume de 18 ml. La rondelle de serrage, comme la collerette, présente alors avantageusement un diamètre de 6 cm +/- 0,5, le diamètre de l'évidement central étant lui de 4 cm. La surface utile de membrane est alors d'environ 12.5 cm². +/- 0,5. Une cellule de diffusion avec de telles dimensions, et notamment qui permettent de ménager une surface utile supérieure à 7 cm². est particulièrement adaptée à l'analyse de composés ou principes actifs contenus dans une formulation d'aérosol. La formulation d'aérosol peut en effet être vaporisée avec précision sur l'échantillon de membrane. Bien entendu, la cellule de diffusion selon l'invention peut être utilisée pour l'analyse de compositions sous forme liquide, solide, gel, pommade etc. également. Il suffit pour cela de déposer un échantillon de la composition, par exemple une goutte de composition liquide, sur la surface utile de membrane. Une telle cellule de diffusion est également particulièrement adaptée à l'analyse de composés dont la pénétration est augmentée par l'application d'un courant électrique à travers la membrane, notamment par électrostimulation ou iontophorèse. En effet, les dimensions de la cellule selon l'invention permettent l'application non seulement de la composition d'intérêt sur la surface utile de la membrane, mais elles peuvent également être adaptées à l'encombrement d'un dispositif d'électrostimulation ou iontophorèse, appliqué sur ladite surface utile pour faire passer le courant à travers la membrane. Avantageusement, un tel dispositif d'électrostimulation ou de iontophorèse se présente sous la forme d'un patch qui est posé directement sur la surface utile de la membrane, une partie dudit dispositif pouvant être pincé entre la membrane et la rondelle de serrage de la cellule de diffusion. Un exemple de dispositif d'électrostimulation ou iontophorèse utilisable avec la cellule de diffusion selon l'invention est décrit dans la demande WO2014/108548.

Dans un mode de réalisation particulier, le compartiment receveur a une forme générale conique présentant, dans sa hauteur, un méplat. Autrement dit, une section du cône est coupée par un plan perpendiculaire à la base. Ainsi, pour une hauteur donnée, le volume du compartiment est réduit comparativement à un compartiment de forme générale cylindrique ou même simplement conique. Par « hauteur », on entend la dimension s'étendant verticalement par rapport à la base du cône.

Dans un mode de réalisation, la cellule de diffusion comprend un conduit de prélèvement s'étendant depuis une base du compartiment receveur, ledit conduit de prélèvement étant en communication fluidique avec ledit compartiment receveur. Le conduit de prélèvement permet de prélever chaque fois que cela est nécessaire, un aliquot du milieu receveur contenu dans le compartiment receveur, notamment aux fins d'analyse. Il peut également permettre de réintroduire des volumes de milieu receveur dans le compartiment receveur au besoin.

L'invention a également pour objet l'utilisation d'une cellule de diffusion telle que décrite ci-dessus, munie d'un échantillon de membrane, pour mesurer la capacité de pénétration d'un composé d'intérêt contenu dans une formulation d'aérosol dans la peau et/ou pour mesurer la capacité d'une formulation d'aérosol à délivrer un composé d'intérêt à travers la peau.

L'invention a également pour objet l'utilisation d'une cellule de diffusion telle que décrite ci-dessus, munie d'un échantillon de membrane, pour mesurer la capacité de pénétration dans la peau d'un composé d'intérêt contenu dans un patch occlusif ou semi-occlusif.

L'invention a également pour objet l'utilisation d'une cellule de diffusion telle que décrite ci-dessus, munie d'un échantillon de membrane, pour mesurer la capacité de pénétration dans la peau d'un composé d'intérêt contenu dans une formulation dans des conditions occlusives ou semi-occlusives.

L'invention a également pour objet l'utilisation d'une cellule de diffusion telle que décrite ci-dessus, munie d'un échantillon de membrane, pour mesurer la capacité de pénétration dans la peau d'un composé d'intérêt contenu dans une composition, ladite pénétration étant stimulée par électrostimulation ou iontophorèse, notamment au moyen d'un dispositif de iontophorèse. La composition se trouve alors avantageusement sous forme de gel ou de patch.

L'invention a également pour objet une méthode d'évaluation de la capacité de pénétration d'un composé d'intérêt contenu dans une formulation aérosol dans la peau et/ou la capacité d'une formulation aérosol à délivrer un composé d'intérêt à travers la peau au moyen d'une cellule de diffusion telle que décrite ci-dessus, comprenant les étapes consistant à :
- positionner un échantillon de membrane au-dessus du milieu receveur du compartiment receveur ;
- rapporter la rondelle de serrage sur l'échantillon de membrane ;
- entrainer la rondelle de serrage en rotation de manière à bloquer les saillies de serrage dans les logements de serrage correspondants de sorte que l'échantillon de membrane est maintenu au-dessus du milieu receveur ;
- vaporiser la formulation d'aérosol sur l'échantillon de membrane ;
- analyser au moins un échantillon du milieu receveur.

L'invention a également pour objet une méthode d'évaluation de la capacité de pénétration dans la peau d'un composé d'intérêt contenu dans un patch occlusif ou semi-occlusif au moyen d'une cellule de diffusion telle que décrite ci-dessus, comprenant les étapes consistant à :
- positionner un patch occlusif ou semi-occlusif comprenant un composé d'intérêt sur un échantillon de membrane ;
- disposer l'ensemble échantillon de membrane/patch occlusif ou semi-occlusif au-dessus du milieu receveur du compartiment receveur ;
- rapporter la rondelle de serrage sur l'échantillon de membrane ;
- entrainer la rondelle de serrage en rotation de manière à bloquer les saillies de serrage dans les logements de serrage correspondants de sorte que l'échantillon de membrane est maintenu au-dessus du milieu receveur ;
- analyser au moins un échantillon du milieu receveur.

Le patch occlusif ou semi-occlusif est avantageusement diriger vers l'extérieur du compartiment receveur. L'échantillon de membrane sur lequel est appliqué le composé d'intérêt, quelle que soit la méthode d'application, est avantageusement maintenu en position au-dessus du compartiment receveur pendant un temps compris entre 1 minutes et 48 heures, avant l'analyse, notamment entre 1 heure et 24 heures. L'homme du métier sait, en fonction de la nature du composé d'intérêt et de la préparation le contenant, le temps d'application à respecter avant analyse.

L'invention a également pour objet une méthode d'évaluation de la capacité de pénétration d'un composé d'intérêt contenu dans une formulation dans la peau et/ou la capacité d'une formulation à délivrer un composé d'intérêt dans des conditions occlusives ou semi-occlusives à travers la peau au moyen d'une cellule de diffusion telle que décrite ci-dessus, comprenant les étapes consistant à :
- positionner un échantillon de membrane au-dessus du milieu receveur du compartiment receveur ;
- rapporter la rondelle de serrage sur l'échantillon de membrane ;
- entrainer la rondelle de serrage en rotation de manière à bloquer les saillies de serrage dans les logements de serrage correspondants de sorte que l'échantillon de membrane est maintenu au-dessus du milieu receveur ;
- appliquer la formulation sur l'échantillon de membrane ;
- positionner un dispositif occlusif ou semi-occlusif au-dessus de la formulation et en contact avec cette dernière;
- analyser au moins un échantillon du milieu receveur.

L'invention a également pour objet une méthode d'évaluation de la capacité de pénétration dans la peau d'un composé d'intérêt contenu dans une composition, ladite pénétration étant stimulée par iontophorèse ou électrostimulation, au moyen d'une cellule de diffusion telle que décrite ci-dessus, comprenant les étapes consistant à :
- positionner un échantillon de composition comprenant un composé d'intérêt sur un échantillon de membrane ;
- disposer l'ensemble échantillon de membrane au-dessus du milieu receveur du compartiment receveur;
- disposer une partie d'un dispositif d'électrostimulation ou iontophorèse, portant un système d'électrodes, sur l'échantillon de composition ;
- rapporter la rondelle de serrage sur l'échantillon de membrane ;
- entrainer la rondelle de serrage en rotation de manière à bloquer les saillies de serrage dans les logements de serrage correspondants de sorte que l'échantillon de membrane et la partie du dispositif d'électrostimulation ou iontophorèse portant le système d'électrodes sont maintenus au-dessus du milieu receveur ;
- appliquer une tension sur l'échantillon de membrane au moyen du dispositif d'électrostimulation ou iontophorèse ;
- analyser au moins un échantillon du milieu receveur.

Alternativement, l'échantillon de membrane peut être disposé au-dessus du milieu receveur du compartiment receveur avant le dépôt de la composition sur la surface utile de membrane.

Avantageusement, la partie du dispositif d'électrostimulation ou iontophorèse portant le système d'électrodes se présente sous la forme d'un patch. Un générateur de tension est relié à la partie du dispositif d'électrostimulation ou iontophorèse portant le système d'électrodes de manière à faire passer un courant de faible intensité à travers la membrane. Avantageusement, le courant appliqué est compris entre 1 et 2 mA, préférentiellement environ 1,5 mA.

La cellule selon l'invention peut être utilisée avec tout type de membrane et notamment avec une membrane biologique, de type épithélium, endothélium, tissu conjonctif, etc., mais également avec des membranes artificielles ou synthétiques.

L'invention sera mieux comprise à la lecture de la description qui suit et à l'examen des figures qui l'accompagnent. Celles-ci sont présentées à titre indicatif et nullement limitatif de l'invention. Les figures représentent :
Figure 1 : une représentation schématique d'une cellule de diffusion de l'état de la technique, déjà décrite ;
Figure 2 : une vue latérale d'un compartiment receveur d'une cellule de diffusion selon un mode de réalisation de l'invention ;
Figure 3 : une vue de dessus du compartiment receveur de la figure 2 ;
Figure 4 : une vue en perspective d'une rondelle de serrage d'une cellule de diffusion selon un mode de réalisation de l'invention, particulièrement adaptée au compartiment receveur des figures 2 et 3 ;
Figure 5 : une vue en perspective d'une cellule de diffusion selon un exemple de réalisation de l'invention ;
Figure 6 : une vue de dessus d'une cellule de diffusion selon un exemple de réalisation de l'invention portant des électrodes d'un dispositif de iontophorèse ;

Les figures 2 à 5 illustrent un exemple de réalisation d'une cellule de diffusion 10 selon l'invention.

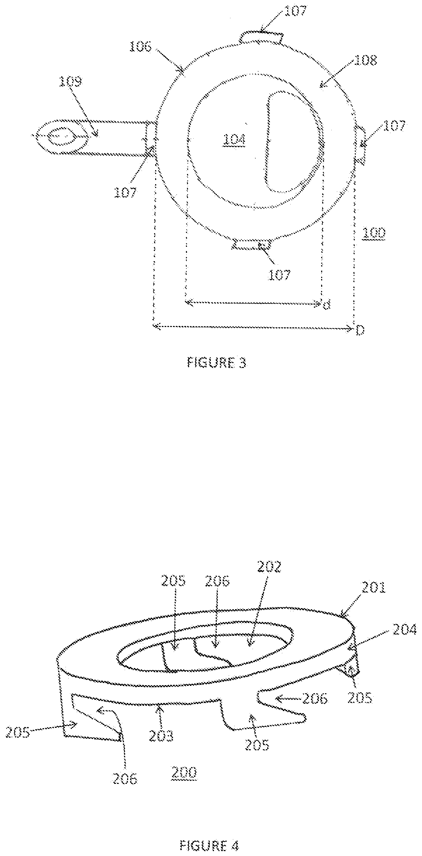

Sur les figures 2 et 3 est représenté un compartiment receveur 100 de forme générale en cône inversé. Plus précisément, le sommet 101 du cône est solidaire d'une base 12 de la cellule de diffusion, la base 103 du cône ménageant une ouverture 104 du compartiment receveur 100 destinée à être recouverte par un échantillon de membrane (non représenté). Dans l'exemple représenté, le cône formé par le compartiment receveur 100 est un cône tronqué. Plus précisément, le cône présente un méplat 105, ce qui permet de réduire le volume interne du compartiment receveur 100 comparativement au volume d'un cône de mêmes dimensions (hauteur, rayon) non tronqué. Bien entendu, en fonction des conditions d'expérimentation dans lesquelles la cellule de diffusion doit être utilisée, et notamment en fonction du composé à étudier, il est possible de modifier le méplat 105, de manière à obtenir un volume de compartiment receveur 100 plus important ou au contraire plus petit. Il est également possible d'utiliser un compartiment receveur 100 de forme conique non tronquée. De même, le compartiment receveur peut avoir une forme générale cylindrique, tronquée ou non, tubulaire, etc. L'homme saura, en fonction de l'utilisation à laquelle la cellule de diffusion est destinée, adapter la forme du compartiment receveur au volume de milieu receveur souhaité.

Dans un exemple particulier, le diamètre du cône 105, correspondant au diamètre d de l'ouverture 104 du compartiment receveur 100, est d'environ 4 cm, pour une hauteur de cône d'environ 5 cm et un méplat tel que le volume du compartiment receveur 100 est de 18 ml, +/-0,5.

Une collerette 106 s'étend radialement vers l'extérieur depuis une périphérie externe de l'extrémité haute, ou base 103, du compartiment receveur 100. La collerette 106 ménage une surface d'appui 108 plane continue en anneau sur toute la périphérie externe du compartiment receveur 100. Par exemple, la collerette a un diamètre externe D compris entre 5 et 7 cm, et notamment un diamètre externe de 6 cm, +/- 5. Ainsi, la surface d'appui 108 a une surface d'environ 1 cm de large tout autour de l'ouverture 104 du compartiment receveur 100.

Des saillies de serrage 107 forment des protubérances ponctuelles depuis la périphérie externe 110 de la collerette 106. Dans l'exemple représenté, quatre saillies de serrage 107 s'étendent en saillie depuis la périphérie externe 110 de la collerette 106. Bien entendu, il est possible de prévoir un nombre inférieur ou supérieur de saillies de serrage 107. Le nombre de saillies 107, qui ne doit pas être inférieur à deux, peut varier en fonction des dimensions de la cellule de diffusion et de la surface de l'échantillon de membrane associée. L'homme du métier saura adapter le nombre de saillies de serrage 107 pour permettre une bonne tenue de l'échantillon de membrane et garantir l'étanchéité de l'ensemble.

Comme cela a été exposé plus haut, les saillies de serrage 107 sont inclinées, en ce sens qu'elles s'étendent en biais en direction de la base 12 de la cellule de diffusion 10. La pente des saillies de serrage 107 peut varier en fonction des épaisseurs de membrane destinées à être acceptées. Dans l'exemple représenté, la pente est d'environ 15°. Les saillies de serrage 107 forment ainsi des plans inclinés aptes à venir en prise avec des logements de serrage de formes complémentaires sur une rondelle de serrage (figure 4).

De manière classique, un conduit de prélèvement 109 s'étend depuis la base du compartiment receveur 100, correspondant au sommet 101 du cône, en communication fluidique avec le volume interne du compartiment receveur 100. Ainsi, il est possible de prélever à loisir des échantillons de milieu receveur. Il est également possible de remplir au besoin le compartiment receveur en milieu receveur, par le biais de ce conduit de prélèvement 109. Bien entendu, la cellule de diffusion 10 peut être dépourvue de conduit de prélèvement, ou au contraire en comprendre plusieurs. Elle peut autrement comprendre tout autre moyen permettant de prélever des échantillons de milieu receveur sans perturber l'expérimentation en cours.

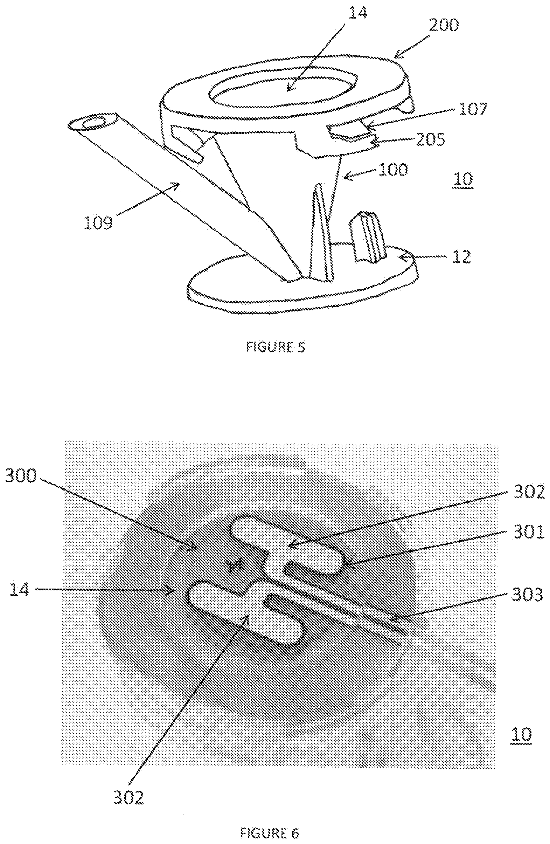

Afin de stabiliser le compartiment receveur 100, une butée 13 est ménagée sur la base 102 de la cellule de diffusion 10, apte à recevoir un poids de stabilisation. La butée 13 est avantageusement diamétralement opposée au conduit de prélèvement 109 (figures 2 et 5).

La cellule de diffusion 10 comprend en outre une rondelle de serrage 200 (figure 4) destinée à coopérer avec le compartiment receveur 100 pour maintenir un échantillon de membrane au-dessus dudit compartiment receveur 100.

La rondelle de serrage 200 se présente sous la forme d'un anneau 201 aplati ménageant un orifice central 202 destiné à coïncider avec l'ouverture 104 du compartiment receveur 100 une fois en position (figure 5). Plus précisément, une surface d'appui plane inférieure 203 de l'anneau 201 est destinée à être superposée à la surface d'appui 108 sur le compartiment receveur 100. Avantageusement, les dimensions des deux surfaces d'appui 108, 203 sont identiques. Ainsi, il y a une superposition parfaite de la collerette 106 et de la rondelle 201, sans réduction du diamètre de l'ouverture 104 du compartiment receveur 100. Le diamètre d de l'orifice 104 du compartiment receveur 100 correspond ainsi au diamètre interne de l'anneau de serrage 200 et au diamètre de la surface utile 14 de la membrane en position dans la cellule de diffusion 10.

Une périphérie externe 204 de l'anneau 201 supporte des pattes 205 s'étendant verticalement vers le bas depuis ladite périphérie externe 204. Chaque patte 205 comprend un évidement 206, formant logement de serrage, destiné à recevoir une saillie de serrage 107 du compartiment receveur 100. Ainsi, quand la rondelle de serrage 200 est positionnée sur le compartiment receveur 100 de manière à ce que l'ouverture 104 du compartiment receveur 100 et l'orifice 202 de la rondelle de serrage 200 soient concentriques, une rotation de ladite rondelle de serrage 200 par rapport au compartiment receveur 100 permet de venir loger les saillies de serrage 107 dans les logements de serrage 206 complémentaires. Dans l'exemple représenté, la rondelle de serrage 200 comporte quatre logements de serrage 206 disposés de manière à ce qu'une fois en position, chaque logement de serrage 206 reçoive une saillie de serrage 107. Bien entendu, la rondelle de serrage 200 peut comprendre un nombre plus important ou moins important de logements de serrage 206.

Une telle cellule de diffusion 10 peut avantageusement être utilisée pour l'évaluation de la capacité de pénétration d'un composé d'intérêt contenu dans une formulation aérosol dans la peau et/ou pour l'évaluation de la capacité d'une formulation aérosol à délivrer un composé d'intérêt à travers la peau. Il est par exemple possible de positionner un échantillon de membrane, tel qu'un échantillon de peau, de diamètre supérieur au diamètre de l'ouverture 104 du compartiment receveur 100 au-dessus de ladite ouverture 104. L'ouverture 104 est ainsi obturée par la membrane. Avantageusement, la membrane a un diamètre sensiblement égal au diamètre externe de la collerette 106. Ainsi, la surface d'appui 108 de la collerette 106 est recouverte par la membrane. On vient ensuite recouvrir la membrane avec la rondelle de serrage 200, de manière à ce que la membrane soit écrasée entre la surface d'appui 108 de la collerette 106 et la surface d'appui 203 de la rondelle de serrage 200. On fait tourner la rondelle de serrage 200 par rapport au compartiment receveur 100 de manière à engager les saillies de serrage 107 dans les logements de serrage 206. On poursuit la rotation jusqu'à son maximum. La liaison entre le compartiment receveur 100 et la rondelle de serrage 200 est alors étanche, la membrane faisant office de joint torique. Il est alors possible de vaporiser la formulation aérosol sur la surface utile 14 de l'échantillon de membrane. Si le diamètre de l'orifice central 202 de l'anneau 201 est égal au diamètre de l'ouverture 104 du compartiment receveur 100, la surface utile 14 de membrane correspond à la surface de membrane disposée au-dessus de ladite ouverture 104.

On procède ensuite de manière classique, en prélevant des échantillons de milieu receveur au moyen du conduit de prélèvement 109, pour analyse.

Comme cela est décrit maintenant en référence à la figure 6, la cellule de diffusion selon l'invention trouve une application particulièrement avantageuse lors de l'évaluation de la pénétration d'un composé d'intérêt pour laquelle ladite pénétration est électrostimulée.

La figure 6 représente une vue partielle de dessus d'une cellule de diffusion 10 telle que décrite précédemment, sur laquelle est monté un échantillon de membrane 300. Une composition comprenant un composé d'intérêt est disposé sur la surface utile 14 de la membrane 300, et est recouverte d'un patch 301 portant des électrodes 302 d'un dispositif de iontophorèse (partiellement représenté). Comme cela est visible sur la figure 6, l'échantillon de membrane 300 et une partie 303 des électrodes 302 sont pincés entre les surfaces d'appui de l'anneau 201 et du compartiment receveur (non visible).

Le système de serrage de la cellule de diffusion selon l'invention rend aisément possible l'utilisation de telles électrodes qui sont maintenues par contact serré contre la surface utile de la membrane de manière à cibler la zone de membrane recevant le courant.

## Revendications

1. Cellule de diffusion (10) comprenant un compartiment receveur (100) destiné à contenir un milieu receveur, une rondelle de serrage (200) destinée à être positionnée au-dessus du compartiment receveur de sorte qu'un échantillon de membrane peut être disposé entre le compartiment receveur et la rondelle de serrage, et des moyens de serrage (107, 206) par rotation de la rondelle de serrage sur le compartiment receveur, lesdits moyens de serrage comprenant
- au moins deux saillies de serrage (107) inclinées sur une périphérie extérieure du compartiment receveur ; et
- au moins deux logements de serrage (206) de forme complémentaire aux saillies de serrage, sur une périphérie extérieure (204) de la rondelle de serrage, ou inversement,
lesdites saillies de serrage étant aptes à être bloquées chacune dans un logement de serrage par rotation de la rondelle de serrage par rapport au compartiment receveur.

2. Cellule de diffusion selon la revendication 1, dans laquelle les saillies de serrage sont inclinées avec une pente comprise entre 1 et 45°.

3. Cellule de diffusion selon la revendication 1 ou 2, comprenant quatre saillies de serrage inclinées et quatre logements de serrage complémentaires régulièrement répartis sur la périphérie extérieure du compartiment receveur et de la rondelle de serrage.

4. Cellule de diffusion selon l'une des revendications précédentes, une collerette (106) s'étend radialement vers l'extérieur du compartiment receveur, ladite collerette formant une surface d'appui (108) pour un échantillon de membrane positionné au-dessus du milieu receveur.

5. Cellule de diffusion selon la revendication 4, dans laquelle les saillies de serrage sont en saillie depuis une périphérie extérieure (110) de la collerette.

6. Cellule de diffusion selon l'une des revendications précédentes, dans laquelle le compartiment receveur, la rondelle de serrage et les moyens de serrage sont en matériau plastique.

7. Cellule de diffusion selon la revendication 6 dans laquelle le compartiment receveur est en polycarbonate et la rondelle de serrage est en polytétrafluoroéthylène.

8. Cellule de diffusion selon l'une des revendications précédentes, dans laquelle le compartiment receveur a un diamètre (d) compris entre 3 et 5 cm et un volume compris entre 5 et 25 ml, de manière préférée un diamètre d'environ 4 cm et un volume d'environ 18 ml.

9. Cellule de diffusion selon l'une des revendications précédentes, dans laquelle le compartiment receveur a une forme générale conique (101, 103) présentant un méplat (105).

10. Cellule de diffusion selon l'une des revendications précédentes, comprenant en outre un conduit de prélèvement (109) s'étendant depuis une base du compartiment receveur, ledit conduit de prélèvement étant en communication fluidique avec ledit compartiment receveur.

11. Utilisation d'une cellule de diffusion selon l'une des revendications 1-10 munie d'un échantillon de membrane, pour mesurer la capacité de pénétration d'un composé d'intérêt contenu dans une formulation aérosol dans la peau et/ou pour mesurer la capacité d'une formulation aérosol à délivrer un composé d'intérêt à travers la peau et/ou pour mesurer la capacité de pénétration dans la peau d'un composé d'intérêt contenu dans un patch occlusif ou semi-occlusif, ou dans une formulation dans des conditions occlusives ou semi-occlusives et/ou pour mesurer la capacité de pénétration dans la peau d'un composé d'intérêt soumis à une électrostimulation ou iontophorèse.

12. Méthode d'évaluation de la capacité de pénétration d'un composé d'intérêt contenu dans une formulation aérosol dans la peau et/ou la capacité d'une formulation aérosol à délivrer un composé d'intérêt à travers la peau au moyen d'une cellule de diffusion selon l'une des revendications 1-10, comprenant les étapes consistant à :
- positionner un échantillon de membrane biologique, artificielle ou synthétique au-dessus du milieu receveur du compartiment receveur ;
- rapporter la rondelle de serrage sur l'échantillon de membrane ;
- entrainer la rondelle de serrage en rotation de manière à bloquer les saillies de serrage dans les logements de serrage correspondants de sorte que l'échantillon de peau est maintenu au-dessus du milieu receveur ;
- vaporiser la formulation aérosol contenant le composé d'intérêt sur l'échantillon de membrane ;
- analyser au moins un échantillon du milieu receveur.

13. Méthode d'évaluation de la capacité de pénétration dans la peau d'un composé d'intérêt contenu dans un patch occlusif ou semi-occlusif au moyen d'une cellule de diffusion selon l'une des revendications 1-10, comprenant les étapes consistant à
- disposer un patch occlusif ou semi-occlusif comprenant un composé d'intérêt sur un échantillon de membrane biologique, artificielle ou synthétique ;
- positionner l'ensemble échantillon de membrane/patch occlusif ou semi-occlusif au-dessus du milieu receveur du compartiment receveur ;
- rapporter la rondelle de serrage sur l'échantillon de membrane ;
- entrainer la rondelle de serrage en rotation de manière à bloquer les saillies de serrage dans les logements de serrage correspondants de sorte que l'échantillon de membrane est maintenu au-dessus du milieu receveur ;
- analyser au moins un échantillon du milieu receveur.

14. Méthode d'évaluation de la capacité de pénétration d'un composé d'intérêt contenu dans une formulation dans la peau et/ou la capacité d'une formulation à délivrer un composé d'intérêt dans des conditions occlusives ou semi-occlusives à travers la peau au moyen d'une cellule de diffusion selon l'une des revendications 1-10, comprenant les étapes consistant à
- positionner un échantillon de membrane au-dessus du milieu receveur du compartiment receveur ;
- rapporter la rondelle de serrage sur l'échantillon de membrane ;
- entrainer la rondelle de serrage en rotation de manière à bloquer les saillies de serrage dans les logements de serrage correspondants de sorte que l'échantillon de membrane est maintenu au-dessus du milieu receveur ;
- appliquer la formulation sur l'échantillon de membrane ;
- positionner un dispositif occlusif ou semi-occlusif au-dessus de la formulation et en contact avec cette dernière;
- analyser au moins un échantillon du milieu receveur.

15. Méthode d'évaluation de la capacité de pénétration dans la peau d'un composé d'intérêt contenu dans une composition, ladite pénétration étant stimulée par iontophorèse ou électrostimulation, au moyen d'une cellule de diffusion selon l'une des revendications 1-10, comprenant les étapes consistant à
- positionner un échantillon de composition comprenant un composé d'intérêt sur un échantillon de membrane ;
- disposer l'ensemble échantillon de membrane au-dessus du milieu receveur du compartiment receveur;
- disposer une partie d'un dispositif d'électrostimulation ou iontophorèse (301, 302, 303), portant un système d'électrodes, sur l'échantillon de composition ;
- rapporter la rondelle de serrage sur l'échantillon de membrane ;
- entrainer la rondelle de serrage en rotation de manière à bloquer les saillies de serrage dans les logements de serrage correspondants de sorte que l'échantillon de membrane et la partie du dispositif d'électrostimulation ou iontophorèse portant le système d'électrodes sont maintenus au-dessus du milieu receveur ;
- appliquer une tension sur l'échantillon de membrane au moyen du dispositif d'électrostimulation ou iontophorèse ;
- analyser au moins un échantillon du milieu receveur.

## Patentansprüche

1. Diffusionszelle (10), die eine Rezeptorkammer (100) umfasst, die dazu bestimmt ist, ein Empfangsmedium zu enthalten, ein Klemmring (200), die dazu bestimmt ist, oberhalb der Rezeptorkammer positioniert zu sein, so dass eine Membranprobe zwischen der Rezeptorkammer und der Klemmring angeordnet werden kann, sowie Mittel zum Klemmen (107, 206) durch Rotation der Klemmring auf der Rezeptorkammer, wobei die Klemmmittel folgendes umfassen:
- mindestens zwei geneigte Klemmvorsprünge (107) auf einem äußeren Umfang der Rezeptorkammer; und
- mindestens zwei Klemmaufnahmen (206) von zu den Klemmvorsprüngen komplementärer Form, auf einem äußeren Umfang (204) der Klemmring, oder umgekehrt,
wobei besagte Klemmvorsprünge geeignet sind, jeweils in einer Klemmaufnahme durch Rotation der Klemmring im Verhältnis zur Rezeptorkammer blockiert zu sein.

2. Diffusionszelle nach Anspruch 1, wobei die Klemmvorsprünge mit einem Gefälle zwischen 1 und 45° geneigt sind.

3. Diffusionszelle nach Anspruch 1 oder 2, mit vier geneigten Klemmvorsprüngen und vier komplementären Klemmaufnahmen, die regelmäßig auf dem Außenumfang der Rezeptorkammer und der Klemmring verteilt sind.

4. Diffusionszelle nach einem der vorherigen Ansprüche, wobei sich ein Kragen (106) radial nach außerhalb der Rezeptorkammer erstreckt und eine Auflagefläche (108) für eine oberhalb des Empfangsmediums positionierte Membranprobe bildet.

5. Diffusionszelle nach Anspruch 4, wobei die Klemmvorsprünge von einem Außenumfang (110) des Kragens überstehen.

6. Diffusionszelle nach einem der vorherigen Ansprüche, wobei die Rezeptorkammer, der Klemmring und die Klemmmittel aus Kunststoff sind.

7. Diffusionszelle nach Anspruch 6, wobei die Rezeptorkammer aus Polykarbonat ist und der Klemmring aus Polytetrafluoroethylen.

8. Diffusionszelle nach einem der vorherigen Ansprüche, wobei die Rezeptorkammer einen Durchmesser (d) zwischen 3 und 5 cm hat und ein Volumen zwischen 5 und 25 ml, bevorzugt einen Durchmesser von etwa 4 cm und ein Volumen von etwa 18 ml.

9. Diffusionszelle nach einem der vorherigen Ansprüche, wobei die Rezeptorkammer eine allgemein konische Form (101, 103) mit einer Abflachung (105) hat.

10. Diffusionszelle nach einem der vorherigen Ansprüche, die außerdem eine Entnahmeleitung (109) umfasst, die sich von einer Basis der Rezeptorkammer aus erstreckt, wobei besagte Entnahmeleitung in fluidischer Verbindung mit besagter Rezeptorkammer steht.

11. Verwendung einer Diffusionszelle nach einem der Ansprüche 1-10, ausgestattet mit einer Membranprobe, um die Eindringfähigkeit einer Verbindung von Interesse, die in einer Aerosolformulierung enthalten ist, in die Haut zu messen und/oder um die Fähigkeit einer Aerosolformulierung zu messen, eine Verbindung von Interesse durch die Haut zu liefern, und/oder um die Eindringfähigkeit in die Haut einer Verbindung von Interesse zu messen, die in einem okklusiven oder semiokklusiven Pflaster enthalten ist, oder in einer Formulierung unter okklusiven oder semiokklusiven Bedingungen, und/oder um die Eindringfähigkeit in die Haut einer Verbindung von Interesse zu messen, die einer Elektrostimulation oder lontophorese unterzogen wird.

12. Verfahren zur Bewertung der Eindringfähigkeit einer Verbindung von Interesse, die in einer Aerosolformulierung enthalten ist, in die Haut und/oder der Fähigkeit einer Aerosolformulierung, eine Verbindung von Interesse durch die Haut zu liefern, mittels einer Diffusionszelle nach einem der Ansprüche 1-10, mit folgenden Phasen:
- eine biologische, künstlich oder synthetische Membranprobe oberhalb des Empfangsmediums der Rezeptorkammer positionieren;
- der Klemmring auf die Membranprobe anstücken;
- der Klemmring in Rotation versetzen, um die Klemmvorsprünge in den entsprechenden Klemmaufnahmen zu blockieren, so dass die Hautprobe oberhalb des Empfangsmediums gehalten wird;
- die Aerosolformulierung, die die Verbindung von Interesse enthält, auf der Membranprobe verdampfen;
- mindestens eine Probe des Empfangsmediums analysieren.

13. Verfahren zur Bewertung der Eindringfähigkeit in die Haut einer Verbindung von Interesse, die in einem okklusiven oder semiokklusiven Pflaster enthalten ist, mittels einer Diffusionszelle nach einem der Ansprüche 1-10, mit folgenden Phasen:
- ein okklusives oder semiokklusives Pflaster anordnen, das eine Verbindung von Interesse auf einer biologischen, künstlichen oder synthetischen Membranprobe umfasst;
- die Einheit Membranprobe/okklusives oder semiokklusives Pflaster oberhalb des Empfangsmediums der Rezeptorkammer positionieren;
- der Klemmring auf die Membranprobe anstücken;
- der Klemmring in Rotation versetzen, um die Klemmvorsprünge in den entsprechenden Klemmaufnahmen zu blockieren, so dass die Membranprobe oberhalb des Empfangsmediums gehalten wird;
- mindestens eine Probe des Empfangsmediums analysieren.

14. Verfahren zur Bewertung der Eindringfähigkeit einer Verbindung von Interesse, die in einer Formulierung enthalten ist, in die Haut und/oder der Fähigkeit einer Formulierung, eine Verbindung von Interesse unter okklusiven oder semiokklusiven Bedingungen durch die Haut zu liefern mittels einer Diffusionszelle nach einem der Ansprüche 1-10, mit folgenden Phasen:
- eine Membranprobe oberhalb des Empfangsmediums der Rezeptorkammer positionieren;
- der Klemmring auf die Membranprobe anstücken;
- der Klemmring in Rotation versetzen, um die Klemmvorsprünge in den entsprechenden Klemmaufnahmen zu blockieren, so dass die Membranprobe oberhalb des Empfangsmediums gehalten wird;
- die Formulierung auf der Membranprobe anbringen;
- eine okklusive oder semiokklusive Vorrichtung über der Formulierung und in Kontakt mit letzterer positionieren;
- mindestens eine Probe des Empfangsmediums analysieren.

15. Verfahren zur Bewertung der Eindringfähigkeit in die Haut einer Verbindung von Interesse, die in einer Zusammensetzung enthalten ist, besagtes Eindringen wird durch lontophorese oder Elektrostimulation stimuliert, mittels einer Diffusionszelle nach einem der Ansprüche 1-10, mit folgenden Phasen:
- eine Zusammensetzungsprobe auf einer Membranprobe positionieren, die eine Verbindung von Interesse umfasst;
- die Einheit Membranprobe oberhalb des Empfangsmediums der Rezeptorkammer anordnen;
- einen Teil einer Elektrostimulations- oder lontophorese-Vorrichtung (301, 302, 303) auf der Zusammensetzungsprobe anordnen, die ein System von Elektroden trägt;
- der Klemmring auf die Membranprobe anstücken;
- der Klemmring in Rotation versetzen, um die Klemmvorsprünge in den entsprechenden Klemmaufnahmen zu blockieren, so dass die Membranprobe und der Teil der Elektrostimulations- oder lontophorese-Vorrichtung, der das System von Elektroden trägt, oberhalb des Empfangsmediums gehalten werden;
- eine Klemmung auf die Membranprobe mittels der Elektrostimulations- oder lontophorese-Vorrichtung aufzubringen;
- mindestens eine Probe des Empfangsmediums analysieren.

## Claims

1. Diffusion cell (10) comprising a receiving compartment (100) for containing a receiving medium, a clamping ring (200) for being positioned above the receiving compartment so that a membrane sample can be arranged between the receiving compartment and the clamping ring, and clamping means (107, 206) that operate by rotation of the clamping ring on the receiving compartment, said clamping means comprising
- at least two clamping protrusions (107) inclined on an outer periphery of the receiving compartment; and
- at least two clamping housings (206) complementary in shape to the clamping protrusions, on an outer periphery (204) of the clamping ring, or conversely,
each of said clamping protrusions being able to be locked into a clamping housing by rotation of the clamping ring relative to the receiving compartment.

2. Diffusion cell according to claim 1, wherein the clamping protrusions are inclined with a slope comprised between 1 and 45°.

3. Diffusion cell according to claim 1 or 2, comprising four inclined clamping protrusions and four complementary clamping housings regularly distributed on the outer periphery of the receiving compartment and the clamping ring.

4. Diffusion cell according to one of the preceding claims, wherein a collar (106) extends radially towards the outside of the receiving compartment, said collar forming a bearing surface (108) for a membrane sample positioned above the receiving medium.

5. Diffusion cell according to claim 4, wherein the clamping protrusions protrude from an outer periphery (110) of the collar.

6. Diffusion cell according to one of the preceding claims, wherein the receiving compartment, the clamping ring and the clamping means are made of plastic material.

7. Diffusion cell according to claim 6, wherein the receiving compartment is made of polycarbonate and the clamping ring is made of polytetrafluoroethylene.

8. Diffusion cell according to one of the preceding claims, wherein the receiving compartment has a diameter (d) comprised between 3 and 5 cm and a volume comprised between 5 and 25 ml, preferably a diameter of about 4 cm and a volume of about 18 ml.

9. Diffusion cell according to one of the preceding claims, wherein the receiving compartment has a generally conical shape (101, 103) with a flat surface (105).

10. Diffusion cell according to one of the preceding claims, further comprising a sampling tube (109) extending from a base of the receiving compartment, said sampling tube being in fluid communication with said receiving compartment.

11. Use of a diffusion cell according to one of claims 1-10 provided with a membrane sample, for measuring the skin penetration ability of a compound of interest contained in an aerosol formulation and/or for measuring the ability of an aerosol formulation to deliver a compound of interest through the skin and/or for measuring the skin penetration ability of a compound of interest contained in an occlusive or semi-occlusive patch, or in a formulation under occlusive or semi-occlusive conditions and/or for measuring the skin penetration ability of a compound of interest subjected to electrostimulation or iontophoresis.

12. Method for evaluating the skin penetration ability of a compound of interest contained in an aerosol formulation and/or the ability of an aerosol formulation to deliver a compound of interest through the skin by means of a diffusion cell according to one of claims 1-10, comprising the steps of:
- positioning a biological, artificial or synthetic membrane sample above the receiving medium of the receiving compartment;
- placing the clamping ring on the membrane sample;
- rotating the clamping ring so as to lock the clamping protrusions into the corresponding clamping housings so that the skin sample is held above the receiving medium;
- vaporising the aerosol formulation containing the compound of interest on the membrane sample;
- analysing at least one sample of the receiving medium.

13. Method for evaluating the skin penetration ability of a compound of interest contained in an occlusive or semi-occlusive patch by means of a diffusion cell according to one of claims 1-10, comprising the steps of
- placing an occlusive or semi-occlusive patch comprising a compound of interest on a biological, artificial or synthetic membrane sample;
- positioning the membrane sample/occlusive or semi-occlusive patch assembly above the receiving medium of the receiving compartment;
- placing the clamping ring on the membrane sample;
- rotating the clamping ring so as to lock the clamping protrusions into the corresponding clamping housings so that the membrane sample is held above the receiving medium;
- analysing at least one sample of the receiving medium.

14. Method for evaluating the skin penetration ability of a compound of interest contained in a formulation and/or the ability of a formulation to deliver a compound of interest under occlusive or semi-occlusive conditions through the skin by means of a diffusion cell according to one of claims 1-10, comprising the steps of
- positioning a membrane sample above the receiving medium of the receiving compartment;
- placing the clamping ring on the membrane sample;
- rotating the clamping ring so as to lock the clamping protrusions into the corresponding clamping housings so that the membrane sample is held above the receiving medium;
- applying the formulation on the membrane sample;
- positioning an occlusive or semi-occlusive device above the formulation and in contact with the latter;
- analysing at least one sample of the receiving medium.

15. Method for evaluating the skin penetration ability of a compound of interest contained in a composition, said penetration being stimulated by iontophoresis or electrostimulation, by means of a diffusion cell according to one of claims 1-10, comprising the steps of
- positioning a composition sample comprising a compound of interest on a membrane sample;
- placing the membrane sample assembly above the receiving medium of the receiving compartment;
- arranging a part of an electrostimulation or iontophoresis device (301, 302, 303), carrying an electrode system, on the composition sample;
- placing the clamping ring on the membrane sample;
- rotating the clamping ring so as to lock the clamping protrusions into the corresponding clamping housings so that the membrane sample and the part of the electrostimulation or iontophoresis device carrying the electrode system are held above the receiving medium;
- applying a voltage to the membrane sample by means of the electrostimulation or iontophoresis device;
- analysing at least one sample of the receiving medium.
